(19) Europäisches Patentamt

European Patent Office

Office européen des brevets

(11) Publication number: **0 515 035 A1**

## (12) EUROPEAN PATENT APPLICATION

(21) Application number: **92303524.0**

(22) Date of filing: **21.04.92**

(51) Int. Cl.5: **G06F 13/42**

(30) Priority: **21.05.91 GB 9111001**

(43) Date of publication of application:
**25.11.92 Bulletin 92/48**

(84) Designated Contracting States:
**DE FR GB IT NL SE**

(71) Applicant: **RESEARCH MACHINES PLC**
**Mill Street**
**Oxford OX2 0BW(GB)**

(72) Inventor: **Leach, David Wesley**
**35 Hensington Road**
**Woodstock, Oxon, OX7 1JH(GB)**

(74) Representative: **Unwin, Stephen Geoffrey**
**S.G. Unwin & Co. 2 North Street**
**Islip Oxford OX5 2SL(GB)**

(54) **A bus timing system of a computer.**

(57) The system comprises: a system bus (1) for carrying address, data and control signals; at least one connector (3, 4, 5) for connecting an additional component (e.g. an expansion card) to the system bus (1), the connector (3, 4, 5) being arranged to provide a feedback signal (FS3, FS4, FS5) when the additional component is addressed; and bus control means (2, 6) for controlling the timing of signals carried by the system bus (1) and being responsive to the feedback signal (FS3, FS4, FS5) to alter the bus timings by the insertion of recovery delays between successive bus cycles when the feedback signal (FS3, FS4, FS5) is received.

FIGURE 2

EP 0 515 035 A1

This invention relates to a bus timing system of a computer and more particularly to a personal computer having a number of expansion slots which may be used for connecting additional components to the system bus.

A personal computer often provides a number of expansion slots so that expansion cards can be added to enhance the computer system's features. Such expansion cards may, for instance, provide hard disk controllers, graphics adapters, network interfaces or other specific functions. Each card may thus have a very different function from other cards connected to the system. For this reason, each card will be able to respond to the computer system's bus controller at different rates and it is often necessary to slow down the bus controller operation to allow enough time for certain expansion cards to operate correctly.

This has previously been done by arranging for slow expansion cards to alter the timing of the command phase by delaying the cycle termination signals so giving more time for the expansion card to complete its functions. This mechanism is commonly referred to as 'inserting wait states'. However, this mechanism has the disadvantage that the CPU is unable to carry out other functions whilst it is waiting for the slow card to complete its functions and so causes delays in the system's operation.

Another situation which arises is that when an expansion card is accessed by successive bus cycles under normal bus timings, the card may be unable to respond quickly enough if the cycles occur in quick succession. Allowance for this can be made by causing a delay between the end of the command phase of one cycle and the beginning of the address phase of the next cycle. This mechanism is commonly referred to as 'inserting recovery delays'. This mechanism has the advantage that the CPU is free to carry out other tasks during the time recovery delays are inserted so allowing for more efficient use of CPU time. However, up until now, there have only been two ways in which recovery delays could be implemented. First, it has been possible to insert recovery delays for all accesses to any expansion card fitted to the system. However, this has the disadvantage that expansion cards which are capable of operating at normal speeds are slowed down unnecessarily. Second, it has been possible to apply recovery delays to specific address ranges. This avoids the problem of slowing some cards down unnecessarily but the address ranges requiring recovery delays have to be known when the recovery logic is designed and this is not always possible as new expansion cards with different address ranges and requiring different timings may subsequently become available.

The invention aims to overcome these disadvantages of the prior art.

According to the invention there is provided a bus timing system of a computer comprising: a system bus for carrying address, data and control signals; at least one connector for connecting an additional component to the system bus, the connector being arranged to provide a feedback signal when an additional component connected thereto is addressed; and bus control means for controlling the timing of signals carried by the system bus and being responsive to the said feedback signal to alter the bus timings by the insertion of recovery delays between successive bus cycles when the feedback signal is received.

Preferred features of the invention will be apparent from the following description and from the subsidiary claims of the specification.

The invention will now be further described, merely by way of example, with reference to the accompanying drawings in which:

Figures 1 (A) to 1(C) illustrate normal bus timings and bus timings with wait-states and recovery delays inserted, respectively;

Figure 2 is a block diagram of one form of bus timing system according to the invention; and

Figure 3 is a block diagram of another form of bus timing system according to the invention.

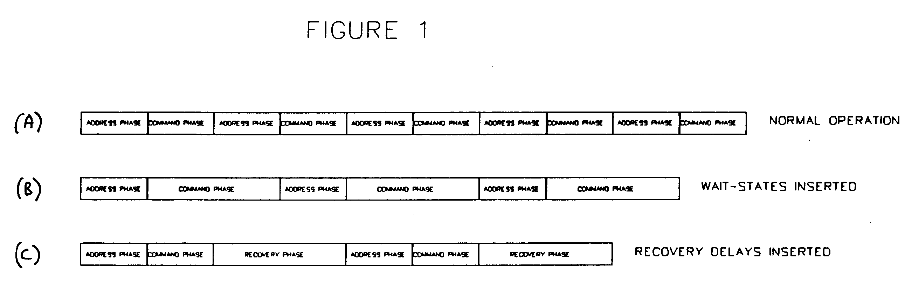

In a normal situation, an expansion card in an expansion slot can be accessed via bus control means which drives the appropriate address and status information during an "address phase" and drives or samples data during a "command phase". The address and command phases have specific timings, and the expansion card is required to adhere to these. This normal situation is illustrated by the timing diagram in Figure 1(A). Each block in the timing diagram represents an elapse of time in which certain activities are occurring, i.e. the signals making up the address phase or command phase are being issued.

As mentioned above, there are situations in which the expansion card may not be able to respond within the specified time. To allow for this, the timing of the command phase may be altered by controlling cycle termination signals which terminate the command phases, thus allowing more time for the expansion card to use or return data. This mechanism is commonly referred to as "inserting wait states" and is illustrated by Figure 1(B).

A further possible situation is where an expansion card in one of the expansion slots is being accessed by consecutive bus cycles under normal bus timings, but the card is unable to respond fast enough if the cycles occur in quick succession. Allowance for this condition can be made by "inserting recovery delays", which effectively causes a delay to be inserted between the end of the command phase of one bus cycle and the start of the address phase of the next bus cycle as illustrated in Figure 1(C).

It can be seen that inserting wait states and inserting recovery delays has the effect of altering the normal bus timing. The mechanism for inserting wait states is well understood and is in common use; however, inserting recovery delays is a more specialised process and it is this method which is used to alter bus timings in the system to be described.

The system described herein avoids the disadvantages of previous systems employing wait states or recovery delays by providing an arrangement whereby an expansion card in one or more specific expansion slots causes the bus timings to be altered in a predetermined manner when a card in the respective slot is accessed whilst maintaining normal timings for expansion cards in other expansion slots.

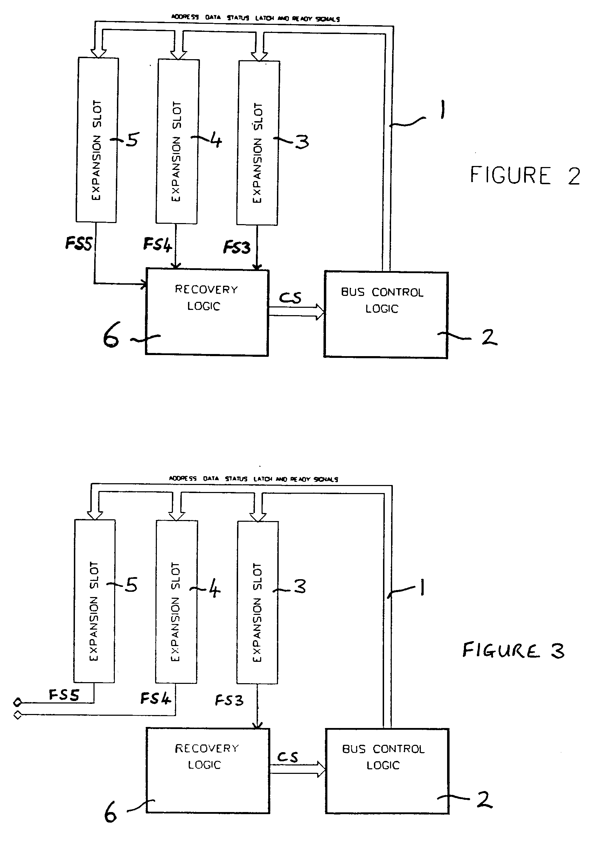

One particular arrangement for achieving this is shown in Figure 2. The bus timing system shown in Figure 2 comprises a system bus 1, a bus control logic unit 2 for controlling signals carried by the bus 1, a plurality of expansion slots 3, 4 and 5 connected to the system bus 1 and a recovery logic unit 6 connected to receive feedback signals FS from the respective expansion slots and to provide control signals CS to the bus control logic unit 2.

The system bus 1 uses a standard set of signals including an address signal, a data signal, latch signals, status signals and cycle termination signals (i.e. ready signals). However, in addition, the system is arranged to provide a set of card selected feedback signals (FS3, FS4, FS5), which are used to indicate that a card is fitted in the respective expansion slot and has been addressed. These feedback signals are driven by the expansion card in the expansion slot when the bus cycle address matches the active address range of that expansion card. Each expansion slot thus provides a unique feedback signal when it is addressed. The card selected feedback signals thus indicate the presence of an expansion card at specific addresses within a specific slot when that card is addressed. The feedback signal is similar to that provided in known arrangements so the system can be used with conventional expansion cards of standard design.

The main feature of the system described herein is that the unique feedback signals provided by the expansion slots when a card connected thereto is addressed are used as an input to the recovery logic unit 6 to cause the appropriate recovery delays to be inserted in the bus cycles.

Each of the expansion slots is designated to receive expansion cards capable of operating at a particular speed. Slots 3, 4 and 5 may, for instance, be designated for 'very slow', 'slow' and 'fast' expansion cards, respectively (these terms relating to specific ranges of bus cycle timings). The recovery logic unit 6 is designed so that when a feedback signal, FS3 say, is received from expansion slot 3, the appropriate control signals CS are provided to the bus control logic unit 2 to alter the bus timings in a predetermined manner according to the designated speed for that slot. Thus, for instance, when a 'very slow' expansion card is fitted, this should be installed in the appropriate slot (in this case slot 3) and when that card is addressed, the system will ensure that the appropriate recovery delays are inserted to suit the requirements of that card. However, when other cards are accessed, e.g. a 'fast' card installed in slot 5, the system ensures that the appropriate bus timings for such a card installed in that slot are used.

For optimum performance, it should be noted that an expansion card must be installed in the appropriate expansion slot, i.e. a 'slow' card in the 'slow' slot, a 'fast' card in the 'fast' slot, etc. If a 'fast' card is inadvertently installed in a 'slow' slot, its operation will, of course, be unnecessarily slowed down and if a 'slow' card is installed in a 'fast' slot, the system may fail to operate. However, when a new expansion card is issued, it is merely necessary to install it in the appropriate slot to ensure that the appropriate bus timings are used when that card is accessed.

In a refinement (not shown) of this system, the recovery delay logic may be programmable to alter the settings of the various expansion slots, e.g. instead of having three slots each for different speed cards as described above, it may be desirable to re-program the recovery delay logic so as to provide one 'fast' slot and two 'very slow' slots.

So, in the arrangement shown in Figure 2, when an expansion card fitted within expansion slot 3 is addressed, it will drive a card selected feedback signal FS3 which is detected by the recovery logic unit 6. This feedback signal identifies which expansion slot the card is connected to and the recovery logic unit 6 ensures the appropriate set of control signals are applied to the bus control logic unit 2 to adjust the bus cycle timings by inserting recovery delays as required. When a card in another expansion slot is addressed, the feedback signal FS3 from expansion slot 3 is no longer produced so the bus cycle timings revert to the default setting (or as dictated by a feedback signal from another expansion slot).

Figure 3 illustrates a less flexible but simpler arrangement, in which expansion slot 3 is designated to receive cards which, require delays in the bus timings whereas slots 4 and 5 are for cards which are capable of operating at normal speeds. Slot 3 is therefore arranged to provide a feedback signal FS3 when a card connected in the slot is addressed so the recovery delay logic 6 causes the bus control logic 2 to alter the bus timings by the insertion of recovery delays as described above. However, when a card in slot 3 is not being accessed, the system reverts to normal bus timings. As slots 4 and 5 are for cards capable of operating at normal speeds, no feedback signals from these slots need be connected to the recovery logic unit 6.

It will be appreciated that the system described above provides a mechanism for adjusting the bus controller timings, and hence the expansion bus timings, on a slot by slot basis, under control of card selected feedback signals, which are driven by the expansion cards when they are accessed by the bus controller of the system.

The system overcomes the disadvantages of both the prior art methods described above as does not rely on address decodes, but can be specific to a single expansion card in a specific expansion slot. The system uses the card selected feedback signals (as described above) to identify that the currently addressed expansion card requires recovery delays. The system thus optimises the performance of the computer by slowing down the bus controller only for slow cards in specific slots and maintaining normal speeds for fast cards in other slots.

As the bus timings are adjusted by insertion of recovery delays rather than wait-states, the CPU is able to perform other functions during the time recovery delays are inserted.

The method of altering the bus timings for specific expansion cards as described above may be used in conjunction with other bus timing control systems. One such example is a system providing 'posted' write cycles as described in our co-pending application No (Publication No GB ).

## Claims

1. A bus timing system of a computer comprising: a system bus (1) for carrying address, data and control signals; at least one connector (3, 4, 5) for connecting an additional component to the system bus (1), the connector (3, 4, 5) being arranged to provide a feedback signal (FS3, FS4, FS5) when an additional component connected thereto is addressed; and bus control means (2, 6) for controlling the timing of signals carried by the system bus (1) and being responsive to the said feedback signal (FS3, FS4, FS5) to alter the bus timings by the insertion of recovery delays between successive bus cycles when the feedback signal (FS3, FS4, FS5) is received.

2. A bus timing system as claimed in claim 1 in which the bus control means comprises a bus controller (2) for controlling signals carried by the system bus (1) and recovery delay logic means (6) connected to receive the feedback signal (FS3, FS4, FS5) from the connector (3, 4, 5) and arranged to provide appropriate control signals to the bus controller (2) on receipt of the feedback signal (FS3, FS4, FS5) to alter the bus timings by the insertion of recovery delays.

3. A bus timing system as claimed in claim 2 comprising a plurality of connectors (3, 4, 5) for receiving additional components, each being arranged to provide a unique feedback signal (F53, FS4, FS5) to the recovery delay logic means (6) when a component connected thereto is addressed.

4. A bus timing system as claimed in claim 3 in which the recovery delay logic means (6) is arranged to provide different control signals (CS) on receipt of the respective feedback signals (FS3, FS4, FS5) and so cause different recovery delays to be inserted in the bus cycles when components connected to the respective connectors (3, 4, 5) are addressed.

5. A bus timing system as claimed in claim 2 comprising a plurality of connections (3, 4, 5) for receiving additional components, at least one connector (3) being arranged to provide a feedback signal to the recovery delay logic means (6) when a component connected thereto is addressed and at least one other connector (4, 5) being provided for use with an additional component which does not require alteration of the bus timings and so is not arranged to provide a feedback signal (FS3, FS4, FS5) to the recovery delay logic means (6).

6. A bus timing system as claimed in any preceding claim in which the or each connector (3, 4, 5) comprises an expansion slot for receiving an expansion card, e.g. a hard disk controller, a graphics adaptor or a network interface.

# FIGURE 1

EP 0 515 035 A1

(A) | ADDRESS PHASE | COMMAND PHASE | ADDRESS PHASE | COMMAND PHASE | ADDRESS PHASE | COMMAND PHASE | ADDRESS PHASE | COMMAND PHASE | ADDRESS PHASE | COMMAND PHASE |   NORMAL OPERATION

(B) | ADDRESS PHASE | COMMAND PHASE | ADDRESS PHASE | COMMAND PHASE | ADDRESS PHASE | COMMAND PHASE |   WAIT-STATES INSERTED

(C) | ADDRESS PHASE | COMMAND PHASE | RECOVERY PHASE | ADDRESS PHASE | COMMAND PHASE | RECOVERY PHASE |   RECOVERY DELAYS INSERTED

FIGURE 2

FIGURE 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | WO-A-8 902 128 (MOTOROLA INC.)<br>* abstract *<br>* page 5, line 1 - page 8, line 13; claims 1,2 *<br>--- | 1,2 | G06F13/42 |
| Y | US-A-4 692 895 (HUFFMAN)<br>* column 1, line 50 - column 2, line 4 *<br>* claim 1; figure 1 *<br>--- | 1,2 | |
| A | WO-A-8 301 322 (BURROUGHS CORPORATION)<br>* page 3, line 25 - page 6, line 10; claim 1 *<br>--- | 1-6 | |
| A | EP-A-0 379 772 (DIGITAL EQUIPMENT CORPORATION)<br>* column 2, line 45 - column 3, line 23 *<br>* claims 1-4 *<br><br>----- | 1-6 | |

TECHNICAL FIELDS
SEARCHED (Int. Cl.5 )

G06F

The present search report has been drawn up for all claims

| Place of search | Date of completion of the search | Examiner |
|---|---|---|
| THE HAGUE | 17 SEPTEMBER 1992 | MCDONAGH F.M. |